# FASCICULE DE BREVET EUROPEEN

(11) **EP 3 345 270 B1**
(45) Date de publication et mention de la délivrance du brevet: **04.11.2020**
(21) Numéro de dépôt: 16766870.6
(22) Date de dépôt: 01.09.2016
(51) Int. Cl.: H02G 3/16

(54) **SYSTEME DE DISTRIBUTION DE COURANT ELECTRIQUE POUR VEHICULE**
ELEKTRISCHES STROMVERTEILUNGSSYSTEM FÜR EIN FAHRZEUG
ELECTRIC CURRENT DISTRIBUTION SYSTEM FOR A VEHICLE

(30) Priorité: 04.09.2015 FR 1558228
(43) Date de publication de la demande: 11.07.2018
(73) Titulaire: Aptiv Technologies Limited, St. Michael (BB)
(72) Inventeur: FASTREZ, Stéphane, 90800 Argiesans (FR); PIRALI, Sylvain, 94130 Nogent-sur-Marne (FR)
(74) Mandataire: Vigand, Philippe
(86) Numéro de dépôt international: PCT/EP2016/070646
(87) Numéro de publication internationale: WO 2017/037192

(56) Documents cités:
- EP-A1- 1 530 411
- EP-A1- 1 780 853
- WO-A1-98/18180
- JP-A- 2014 079 093
- US-B2- 7 733 632

## Description

### DOMAINE TECHNIQUE

La présente invention concerne un dispositif électronique et plus particulièrement une boîte de raccordement électrique d'un système de distribution de courant électrique pour véhicule.

### ARRIERE-PLAN TECHNOLOGIQUE DE L'INVENTION

Une boîte de raccordement électrique pour véhicule est généralement un module électrique comprenant des éléments de commutation permettant la distribution de courant électrique aux différents accessoires du véhicule. Cette boîte de raccordement est généralement désignée par différents termes anglophones tels que 'Power distribution Box', 'Relay Box', ou encore 'Junction Box'. Cette boîte est généralement commandée par un module électronique de commande comprenant un microcontrôleur permettant l'acquisition des commandes de l'utilisateur du véhicule.

La boîte de raccordement électrique d'un véhicule est le cœur de la distribution d'énergie et de protection de circuit dans le véhicule. Le but principal de la boîte de raccordement électrique est de fournir un emplacement centralisé pour l'énergie électrique et de distribution de signal pour les circuits de véhicules et leurs composants associés à commande électrique. La boîte de raccordement électrique comprend un système de distribution de puissance et une carte de circuit imprimé pour commander l'assemblage des fusibles et des dispositifs de commutation tels que des relais. La boîte de raccordement électrique est en communication électrique avec un boîtier de commande. Le boîtier de commande est une unité de contrôle qui traite les commandes de l'utilisateur du véhicule, et envoie des signaux aux relais contenus dans la boîte de raccordement électrique pour contrôler les essuie-glaces, les feux de voiture, le dégivrage... Le boîtier de commande et la boîte de raccordement électrique sont typiquement deux ensembles distincts qui sont situées à distance l'une de l'autre à l'intérieur de la caisse du véhicule.

De façon conventionnelle, les relais sont commandés par des modules électroniques via des connexions câblées au boîtier de commande. La boîte de raccordement électrique est généralement reliée au boîtier de commande par un faisceau et des connecteurs de câblage standard, ce qui conduit à un grand nombre de connecteurs, de languettes de connecteur et de pistes de cuivre sur la carte de circuit imprimé.

Le document US 7 733 632 B2 divulgue une boîte de raccordement électrique configurée pour être montée dans un véhicule. Selon ce document, un boîtier comprend un premier élément de boîtier et un deuxième élément de boîtier. Le premier élément de boîtier est muni d'un côté d'une section de montage de module de fusible ayant une ouverture latérale. Le deuxième élément de boîtier est pourvu du même côté que le premier élément de boîtier d'une section de montage de module relais ayant une ouverture latérale et s'étendant vers le bas. Un cadre de montage d'une unité de contrôle électrique s'étend à partir d'une paroi inférieure du deuxième élément du boîtier. Une unité de contrôle électrique est disposée sur un deuxième côté d'une paroi inférieure du deuxième élément de boîtier et parallèlement à la section de montage du module relais. Un module fusible est fixé à la section de montage du module fusible pour recevoir les fusibles. Un module relais est fixé à la section de montage du module relais pour recevoir les relais. Le module fusible et le module relais qui génèrent de la chaleur sont disposés d'un côté du boîtier dans le sens vertical.

L'invention vise à proposer une solution simple et économique aux problèmes de complexité et de coût des dispositifs existants.

### RESUME DE L'INVENTION

L'invention propose une boîte de raccordement électrique pour véhicule comprenant plusieurs relais, un support de relais, et une grille de connexion comportant des sections de raccordement, chaque relais comportant des broches de connexion électriques permettant l'enfichage du relais dans le support de relais et permettant de se connecter électriquement à la grille de connexion. Chaque relais comporte une interface de bus de communication qui est raccordé à une broche du relais dite broche de commande. La grille de connexion comporte une section formant bus de communication, les broches de commande des relais étant électriquement connectées à la section formant bus de communication lorsque les relais sont enfichés dans le support.

La section formant bus de communication permet de s'affranchir de l'utilisation d'une carte à circuit imprimé comme support électrique du bus. L'utilisation de relais comprenant spécifiquement une interface de bus de communication ainsi que l'utilisation d'une section de la grille de connexion comme bus de communication permet de s'affranchir de plusieurs sections indépendantes de commande individuelle de chaque relais. En effet, le bus de communication formé par une section de la grille de connexion permet de proposer une section de commande commune à tous les relais, le bus de communication permettant un adressage individuel de chaque relais commandé.

La section formant bus de communication peut être couplée électriquement à une section de masse électrique de la grille de connexion de sorte à former un condensateur électrique. La section formant bus de communication peut comporter une épaisseur inférieure aux autres sections. Le relais peut comporter un commutateur électromécanique prévu pour faire circuler transitant le courant électrique distribué aux charges électriques du véhicule ou un commutateur de type semi-conducteur prévu pour faire circuler le courant électrique distribué aux charges électriques du véhicule.

Le bus de communication peut être de type LIN. La grille de connexion peut comporter une autre section formant un bus de transmission en paire différentielle avec la section formant bus de communication, une autre broche de commande du relais étant connectée électriquement à l'autre section formant un bus de transmission en paire différentielle. La boîte de raccordement électrique peut comprendre de plus une languette de raccordement électrique vers l'extérieur de la boîte, la languette étant électriquement connectée à la section formant bus de communication.

Un système de distribution de courant électrique pour véhicule peut comprendre un boîtier de commande muni d'un microcontrôleur, et une boîte de raccordement électrique tel que décrite ci-dessus. Le boîtier de commande peut comporter une interface de bus de communication reliée électriquement à la section formant bus de communication de la boîte de raccordement électrique.

### BREVE DESCRIPTION DES DESSINS

D'autres caractéristiques, buts et avantages de l'invention apparaîtront à la lecture de la description détaillée qui va suivre, et en regard des dessins annexés, donnés à titre d'exemple non limitatif et sur lesquels:
La figure 1 est une vue en perspective qui représente schématiquement une boîte de raccordement électrique assemblée selon l'invention.
La figure 2 est une vue en perspective qui représente schématiquement un relais de la boîte de raccordement électrique de la figure 1 et qui montre plus particulièrement le dessous du relais.
La figure 3 est un schéma qui représente l'architecture électrique du relais de la figure 2.
La figure 4 est une vue en perspective éclatée qui représente schématiquement la boîte de raccordement électrique de la figure 1.
La figure 5 est une vue en perspective qui représente schématiquement l'intérieur de la boîte de raccordement électrique de la figure 1.
La figure 6 est une vue en perspective qui représente schématiquement la grille de connexion de la boîte de raccordement électrique de la figure 1.
La figure 7 est une vue similaire à celle de la figure 6 qui représente schématiquement une grille de connexion de la boîte de raccordement suivant un deuxième mode de réalisation.
La figure 8 est un schéma similaire celui de la figure 3 qui représente l'architecture électrique d'un relais suivant le deuxième mode de réalisation.
La figure 9 est un bloc diagramme qui représente schématiquement un système de distribution de courant électrique pour véhicule comportant une boîte de raccordement selon l'invention.

### DESCRIPTION DES MODES DE REALISATION PREFERES

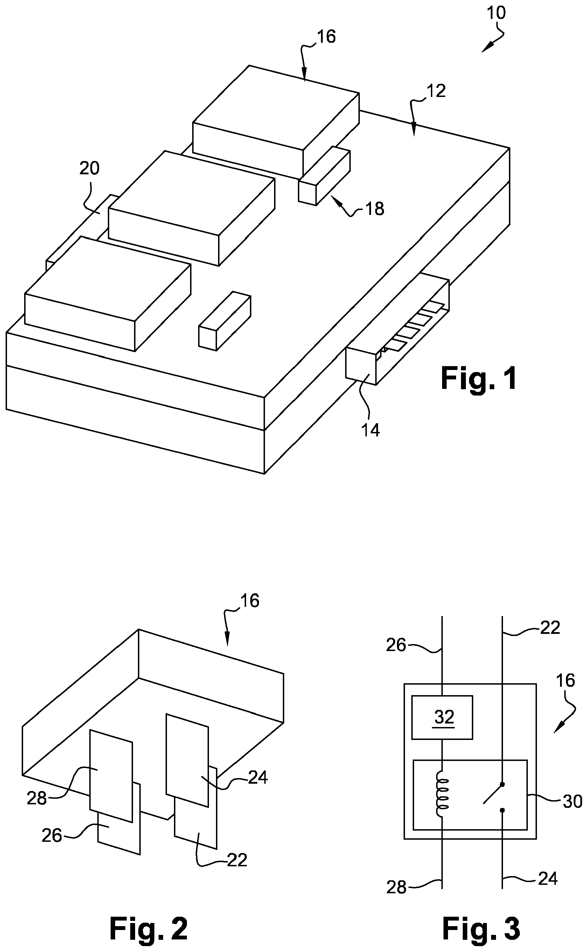

Selon la figure 1 une boîte de raccordement électrique 10 pour véhicule comprend un boîtier 12 pourvu d'un premier connecteur 14 permettant son raccordement à un réseau de distribution de courant électrique aux différentes charges électriques du véhicule. La boîte de raccordement électrique 10 comprend également des relais 16 montés sur l'extérieur du boîtier 12, permettant ainsi leurs accessibilités. La boîte de raccordement 10 comprend également des fusibles 18 assurant la protection électrique du réseau de distribution électrique vers les différentes charges électriques du véhicule. La boîte de raccordement 10 comprend un deuxième connecteur 20 permettant son raccordement électrique à des signaux de commande, les signaux de commande permettant d'assurer la commutation des relais pour alimenter les diverses charges électriques du véhicule.

La boîte de raccordement 10 peut également ne pas comprendre de fusibles 18 montés sur le boîtier 12, notamment lorsque la protection électrique de la boîte de raccordement 10 est assurée en amont ou en aval de celle-ci, c'est à dire est assurée par un autre boîtier connecté sur le réseau de distribution du courant électrique. Le nombre de connecteur de la boîte de raccordement 10 n'est évidemment pas limité à deux connecteurs. Cela dépend de la topologie électrique du réseau de distribution électrique ; le cas échéant, un seul connecteur peut regrouper les signaux de commandes et les signaux de distribution de courants électriques. Les connecteurs 14, 20 permettant le raccordement de la boîte de raccordement électrique 10 à un réseau de distribution de courant électrique aux différentes charges électriques du véhicule peuvent être remplacés par d'autres moyens de connexion, tel que par exemple des connexions électriques de type cosses vissées ou par des terminaux (ou contacts) insérés individuellement dans la boîte de raccordement électrique 10.

Selon la figure 2, chaque relais 16 comporte quatre broches. Une première broche 22 et une deuxième broche 24 permettent la distribution de courant électrique aux charges électriques du véhicule. Une troisième broche 26 et une quatrième broche 28 assurent la commande du relais 16. Le relais 16 est un composant de commutation de charge électrique fonctionnant comme un interrupteur commandable. Les broches 22, 24, 26, 28 de chaque relais 16 permettent l'interfaçage des relais 16 avec les éléments du circuit électrique qui transmettent les signaux électriques nécessaires à leur fonctionnement.

Le nombre de broche des relais n'est pas limité à quatre. Des relais 16 comprenant par exemple huit broches dans le cas de relais double peuvent également convenir à l'invention. L'affectation des broches des relais n'a pas d'importance, seules les fonctions primaires d'un relais, à savoir la commande du relais et le pilotage des charges électriques sont nécessaire à l'invention.

Selon la figure 3, chaque relais 16 comprend un commutateur 30 de type électromécanique connecté entre la première broche 22 du relais et la deuxième broche du relais 24. Le commutateur 30 est également connecté à la quatrième broche du relais 28, dite broche de masse électrique du relais. Le relais 16 comprend également une interface de bus de communication 32. L'interface de bus de communication 32 est raccordée à la troisième broche 26 du relais dite broche de commande, et d'autre part au commutateur 30. Lorsque le commutateur 30 est commandé en position fermé, il permet de commuter le courant électrique de distribution aux charges électriques du véhicule de la première broche 22 vers la deuxième broche 24. Le commutateur 30 du relais est donc l'élément électrique par lequel le courant électrique distribué aux charges électriques du véhicule transite. Lorsque le commutateur 30 est commandé en position ouverte, le courant électrique ne circule plus de la première broche 22 vers la deuxième broche 24. L'interface de bus de communication 32 est une interface de bus d'adressage permettant de connecter toutes les broches de commande 26 des relais 16 entre elles. La commutation d'un relais 16 est effective suivant un adressage qui est propre au relais devant être commuté.

L'invention ne se limite pas à aux commutateurs de type électromécanique. Des commutateurs de type semi-conducteur, tel que par exemple des transistors de puissances de types 'MOSFET' ou de type 'SMART' de puissance peuvent convenir à l'invention.

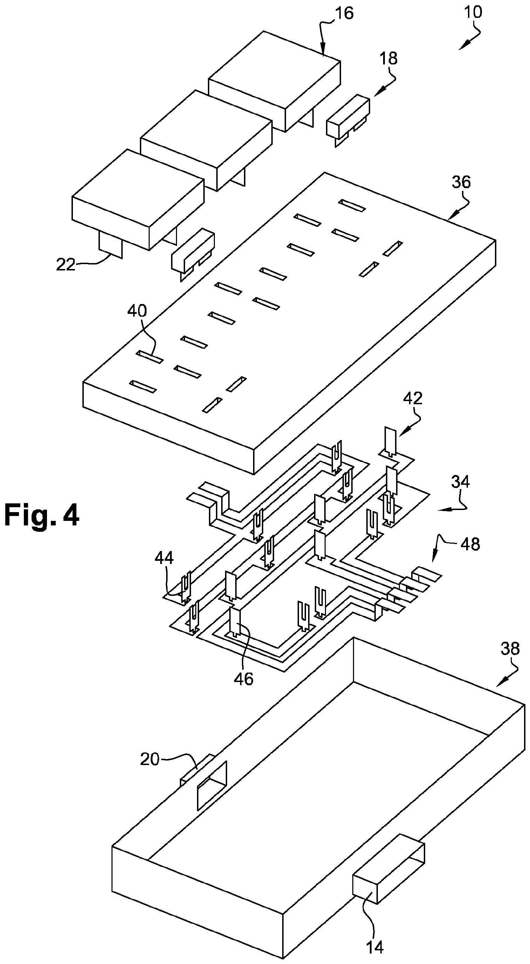

Selon la figure 4, la boîte de raccordement 10 électrique pour véhicule comprend les relais 16, les fusibles 18, et une grille de connexion 34. La grille de connexion 34 est également communément désignée par son terme anglophone 'leadframe'. La boîte de raccordement électrique 10 comprend également un support de relais 36 et un fond de boîtier 38 formant ainsi le boîtier 12. Le support de relais 36 comprend des ouvertures 40 dans lesquels viennent s'enficher les relais 16 et les fusibles 18. La grille de connexion 34 est équipée de broches de contact 42 sur lesquels les broches des relais 22, 24, 26, 28 et des fusibles viennent en contact de sorte que les broches des relais 22, 24, 26, 28 et des fusibles soient en continuité électrique avec la grille de connexion 34. La grille de connexion 34 et le support de relais 36 sont donc agencés de sorte que les broches des relais 22, 24, 26, 28 puissent être connectées électriquement à la grille de connexion 34. Les broches de contacts 42 sont de types contact en fourches 44 ou contact plat 46, appelés également contacts femelles. Les broches de contacts 42 sont reliées électriquement à la grille de connexion 34 par des moyens connus tels que par exemple par soudage ou par insertion. Les broches de contacts 42 de types contact en fourches 44 sont également communément désignée par leur terme anglophone 'tuning fork'.

Alternativement, le support de relais 36 et le fond de boîtier 38 peuvent être en une seule pièce formant le boîtier 12 de la boite de raccordement électrique 10. L'invention ne se limité également pas à une boîte de raccordement 10 comprenant des relais 16, d'autres composants électriques, tels que par exemple des résistances de puissances ou des diodes, peuvent également être enfichés dans le support de relais 36. Les broches de contacts 42 peuvent également être de géométrie diverse, leur rôle étant d'assurer le contact électrique entre les composants enfichés dans le support de relais 36 et la grille de connexion 34.

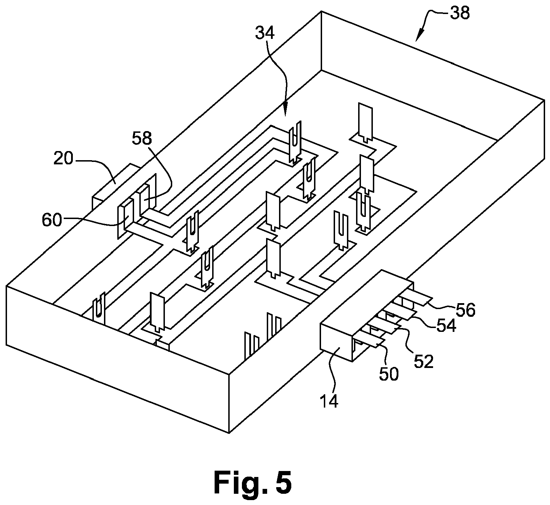

Selon la figure 5, la grille de connexion 34 est fixée en fond de boîtier 38. La grille de connexion 34 peut être fixée de plusieurs façons connues telles que par exemple par surmoulage dans un boitier de type plastique ou résine, ou soit par collage. Selon la figure 4 et la figure 5, la grille de connexion 34 comprend des languettes 48 (ou contacts mâles) venant s'insérer dans le premier et le deuxième connecteurs 14, 20 assurant ainsi au réseau de distribution de courant électrique du véhicule et aux signaux de commande de commutation des relais d'être en contact électrique avec la grille de connexion 34. Le premier connecteur 14 comprend une languette d'alimentation 50 de la boîte de raccordement 10 électrique et des languettes de pilotage de charges 52, 54, 56 du véhicule raccordées à la boîte de raccordement 10 électrique. Le deuxième connecteur 20 comprend une languette de commande des relais 58 et une languette de masse électrique 60. A titre d'exemple, les charges électriques du véhicule peuvent être des éclairages, des essuies glaces, le dégivrage arrière, la climatisation...

Bien que représentée coplanaire, la grille de connexion 34 peut être de forme géométrique diverse. Une grille de connexion non coplanaire peut s'avérer nécessaire en cas de boite de raccordement 10 comprenant un nombre important de relais. Les languettes des connecteurs peuvent également être indépendantes de la grille de connexion 34, c'est-à-dire que le connecteur 14 peut avoir ces propres languettes 48 pouvant être connectées à la grille de connexion 34 par exemple par soudage ou par insertion.

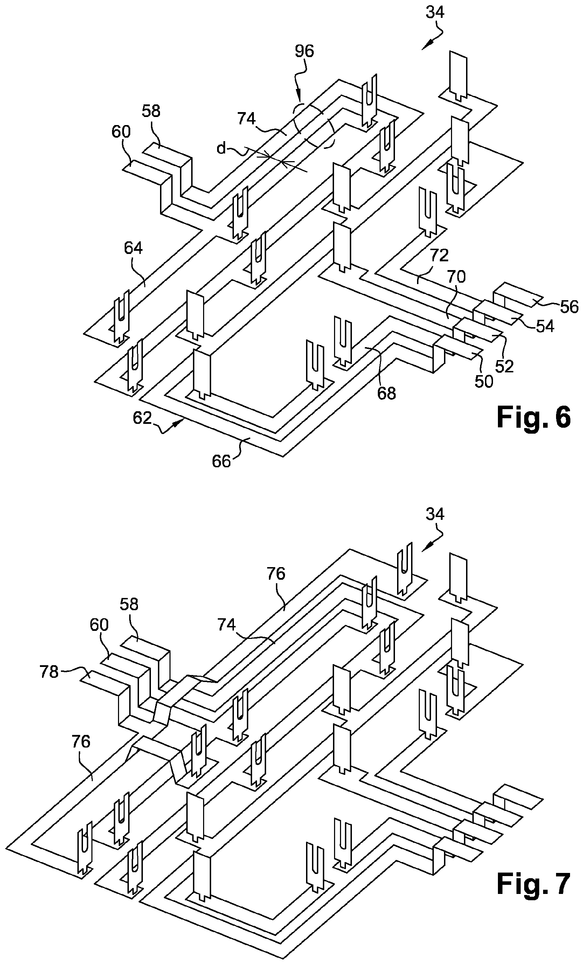

Selon la figure 6, la grille de connexion 34 comporte des sections de raccordement 62. La grille de connexion 34 comporte notamment une section de masse électrique 64, une section d'alimentation électrique 66 et des sections de pilotage des charges du véhicules 68, 70, 72. La grille de connexion 34 comporte également une section formant un bus de communication 74. Les broches d'alimentation des relais 22 sont électriquement connectées à la section d'alimentation électrique de la boîte 66, les broches de masse électrique des relais 28 sont connectées à la section de masse électrique 60. Les broches de pilotage des charges des relais 24 sont reliées aux différentes sections de pilotage des charges électriques du véhicule 68, 70, 72. Les broches de commande des relais 26 sont reliées à la section formant bus de communication 74. De même la languette d'alimentation de la boîte de raccordement électrique 50, la languette de masse électrique 60, la languette de commande des relais 58 et les languettes de pilotage de charges électriques du véhicule 52, 54, 56 sont respectivement électriquement connectées à la section d'alimentation électrique 66, la section de masse électrique 64, à la section formant bus de communication 74 et aux sections de pilotage des charges du véhicules 68, 70, 72. La languette de commande des relais 58 fait donc partie de la section formant bus de communication 74.

Les avantages de l'utilisation d'une boite de raccordement électrique 10 comprenant une section de la grille de connexion formant bus de communication 74 sont la simplification de la fabrication et de l'assemblage de la boite de raccordement électrique 10, la réduction des temps d'assemblage et donc les coûts de production. L'utilisation des relais 16 comprenant une interface de bus de communication 32 avec la boite de raccordement 10 selon l'invention permet une optimisation également de l'architecture électrique du véhicule, aussi bien sûr le nombre de fils de commande nécessaire au pilotage de la boite de raccordement 10 mais également sur le coût de la boite de raccordement électrique 10.

La section de la grille de connexion formant bus de communication 74 peut être du type LIN (Local Interconnect Network). De préférence, la section formant bus de communication 74 est également couplée électriquement à la section de masse électrique 64 de sorte à former un condensateur 96. La section formant bus de communication 74 et la section de masse électrique 64 sont alors suffisamment proche l'une de l'autre de sorte à former les électrodes du condensateur 96. La valeur électrique du condensateur 96 sera ajustable en fonction des caractéristiques géométriques de la section formant bus de communication 74, de la section de masse électrique 64 mais également de la distance d séparant ces deux sections. Ce condensateur 96 permet le filtrage de parasites électriques sur la section formant bus de communication, les parasites électriques pouvant être par exemple induits par les interférences électriques issues de l'environnement dans lequel la boîte de raccordement électrique 10 est implantée. Ce condensateur permet d'optimiser la vitesse de transmission des données aux alentours de quelques dizaines de kbit/s. La section formant bus de communication 74 peut également avoir des dimensions géométriques différentes des autres sections, notamment une épaisseur plus faible que les autres sections de la grille de connexion 34. En effet, la section formant bus de communication 74 ne transporte pas de forts courants électriques tels que ceux nécessaire au pilotage des charges du véhicule. Le connecteur 14 peut également comprendre d'autres languettes de connexion. Alternativement, le condensateur 96 peut être un composant électronique connecté électriquement entre la section formant bus de communication 74 et la section de masse électrique 64

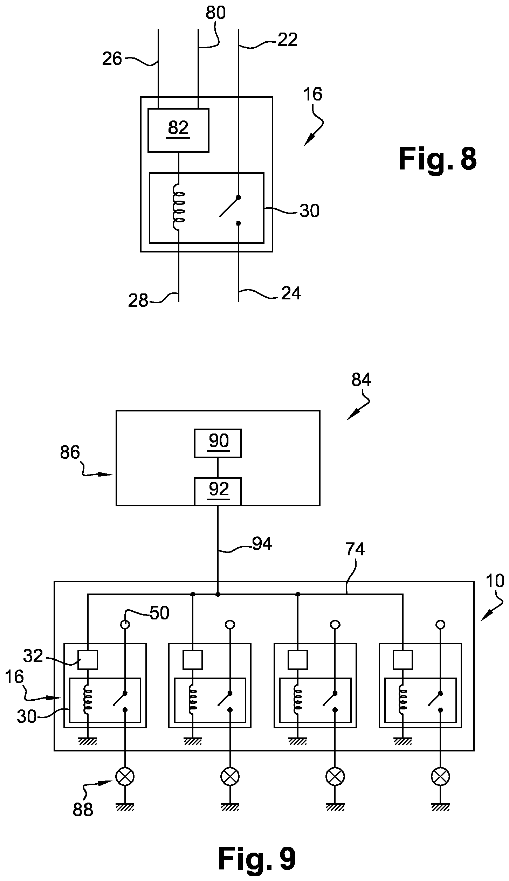

Selon la figure 7, dans un autre mode de réalisation, la grille de connexion 34 peut comprendre une autre section de raccordement 76 formant un bus de transmission en paire différentielle avec la section formant bus de communication 74, 76. De préférence cette section 76 aura des caractéristiques géométriques similaires et aura un tracé parallèle à la section formant bus de communication 74. Le deuxième connecteur 20 comprend également une languette supplémentaire 78 électriquement connectée à l'autre section de raccordement 76 formant un bus de transmission en paire différentielle 74, 76. Le bus de transmission en paire différentielle 74, 76 peut-être par exemple de type CAN (Controller Area Network). Egalement dans ce mode alternatif de réalisation et selon la figure 8, les relais 16 comprennent une autre broche de commande 80 sur laquelle l'autre section de raccordement 76 formant un bus de transmission en paire différentielle est électriquement connectée. Dans ce mode de réalisation particulier, les relais 16 comprennent donc deux broches de commande 26, 80. Les relais 16 comprennent une interface de bus de communication en paire différentielle 82 qui est raccordée aux deux broches de commande 26, 80. Les autres caractéristiques de ce mode de réalisation sont similaires au mode de réalisation décrit précédemment.

Selon la figure 9, un système de distribution de courant électrique 84 pour véhicule peut comprend un boîtier de commande 86, la boite de raccordement électrique 10 telle que décrite dans les modes de réalisations précédents et des charges du véhicule 88. Le boîtier de commande 86 comprend un microcontrôleur 90 et une interface de bus de communication 92. Le microcontrôleur 90 et l'interface de bus de communication 92 du boîtier de commande sont reliés électriquement entre eux. L'interface de bus de communication du boîtier de commande 92 est reliée électriquement à un faisceau électrique du véhicule 94. Le faisceau électrique 94 s'interface électriquement avec la boîte de raccordement électrique 10 de sorte que l'interface de bus de communication du boîtier de commande 92 est connectée électriquement à la section formant bus de communication 74 de la boîte de raccordement électrique 10. Ainsi des commandes d'activation d'une charge du véhicule 88 sont détectées par le boîtier de commande 86. Ce boîtier 86 envoie à la boîte de raccordement électrique 10 via le bus de communication 74, 94, une commande de commutation d'un relais 16 pilotant une charge 88 à activer.

De façon fonctionnelle, lorsqu'un utilisateur d'un véhicule veut commander une charge électrique 88 telle que par exemple l'air conditionné, le microcontrôleur 90 du boîtier de commande 86 reconnait l'activation de la commande dans l'habitacle du véhicule. Le microcontrôleur 90 transmet alors la commande à l'interface de communication du boîtier de commande 92. Par l'intermédiaire de l'interface de communication du boitier de commande 92, un message est transmis à la boîte de raccordement électrique 10 sur le bus de communication 94. Le message comprend la commande d'activation de l'air conditionné. Ce message comprend également l'identité du relais 16 à activer. En d'autres termes, le message comprend un message qui est adressé à un relais 16 donné, ce relais 16 étant celui permettant l'activation de l'air conditionné. Le bus de communication 94 est relié électriquement avec la section de la grille de connexion formant bus de communication 74 du boitier de raccordement électrique 10. Comme illustré précédemment par la figure 5, cette liaison électrique est réalisée par la languette de commande des relais 58 du deuxième connecteur 20, cette languette faisant partie de la section formant bus de communication 74. Les interfaces de bus de communication relais 32 connectés sur la section formant bus de communication 74 reçoivent la commande circulant sur la section formant bus de communication 74. Les relais 16 dont l'identité n'est pas celle adressée par le message ne s'activent pas. Le relais 16 de la boîte de raccordement électrique 10 pour lequel le message est adressé, ferme son commutateur 30 de sorte que l'alimentation de la boîte de raccordement électrique 50, alimente la charge électrique 88 concerné à savoir dans cet exemple le système d'air conditionné. En d'autres termes, lorsque le commutateur 30 du relais 16 est fermé, le courant électrique peut circuler depuis l'alimentation de la boîte de raccordement électrique 50 vers la charge électrique 88.

Les avantages d'un tel système de distribution de courant électrique 84 pour véhicule sont la possibilité de diagnostiquer directement un défaut éventuel de la charge piloté par le relais 16, la réduction de consommation global d'un tel système, son poids et donc également son coût. A titre d'exemple, les défauts diagnostiqués sur la charge peuvent être de type 'court-circuit' ou également de type 'circuit ouvert'. Ces défauts sont détectés par l'interface de bus de communication 32 des relais 16 et sont donc communiquer directement au boîtier de commande 86. Le boîtier de commande permettant par exemple d'informer l'utilisateur du véhicule de se rendre auprès d'un garagiste pour éradiquer le défaut. Egalement la consommation d'un tel système 84, notamment la consommation électrique du bus de communication 74, est réduite en comparaison des systèmes connus pour lesquels une interface de bus de communication est fixée sur une carte à circuit imprimé de la boite de raccordement électrique. Selon l'invention, la consommation du système de distribution de courant électrique 84 dépendra directement du nombre de relais 16 comprenant une interface de bus de communication 32 enfichés dans la boîte de raccordement électrique. Le poids du système 84 est également réduit puisque le système s'affranchi d'une carte à circuit imprimé.

## Revendications

1. Boîte de raccordement électrique (10) pour véhicule comprenant plusieurs relais (16), un support de relais (36), et une grille de connexion (34) comportant des sections de raccordement (62), chaque relais (16) comportant des broches de connexion électriques (22, 24, 26, 28) permettant l'enfichage du relais (16) dans le support de relais (36) et permettant de se connecter électriquement à la grille de connexion (34), **caractérisé en ce que** chaque relais (16) comporte une interface de bus de communication (32) qui est raccordé à une broche du relais dite broche de commande (26), et **en ce que** la grille de connexion (34) comporte une section formant bus de communication (74), les broches de commande des relais (26) étant électriquement connectées à la section formant bus de communication (74) lorsque les relais (16) sont enfichés dans le support (36).

2. Boîte de raccordement électrique (10) pour véhicule selon la revendication 1 **caractérisée en ce que** la section formant bus de communication (74) est couplée électriquement à une section de masse électrique de la grille de connexion (64) de sorte à former un condensateur électrique.

3. Boîte de raccordement électrique (10) pour véhicule selon l'une quelconque des revendications précédentes, **caractérisée en ce que** la section formant bus de communication (74) comporte une épaisseur inférieure aux autres sections (68, 70, 72).

4. Boîte de raccordement électrique (10) selon l'une quelconque des revendications précédentes, **caractérisée en ce que** le relais (16) comporte un commutateur électromécanique prévu pour faire circuler transitant le courant électrique distribué aux charges électriques du véhicule.

5. Boîte de raccordement électrique (10) selon l'une quelconque des revendications 1 à 3, **caractérisée en ce que** le relais (16) comporte un commutateur de type semi-conducteur prévu pour faire circuler transitant le courant électrique distribué aux charges électriques du véhicule.

6. Boîte de raccordement électrique (10) pour véhicule selon l'une quelconque des revendications précédentes **caractérisée en ce que** le bus de communication est de type LIN.

7. Boîte de raccordement électrique (10) pour véhicule selon l'une quelconque des revendications 1 à 5, **caractérisée en ce que** la grille de connexion (34) comporte une autre section (76) formant un bus de transmission en paire différentielle (74, 76) avec la section formant bus de communication (74), une autre broche de commande du relais (80) étant connectée électriquement à l'autre section (76) formant un bus de transmission en paire différentielle (74, 76).

8. Boîte de raccordement électrique (10) pour véhicule selon l'une quelconque des revendications précédentes, **caractérisé en ce que** la boîte de raccordement électrique (10) comprend de plus au moins une languette de commande des relais (58) dirigée vers l'extérieur de la boîte (10), la languette (58) étant électriquement connectée à la section formant bus de communication (74).

9. Système de distribution de courant électrique (84) pour véhicule comprenant un boîtier de commande (86) muni d'un microcontrôleur (90), **caractérisé en ce que** le système (84) comprend également une boîte de raccordement électrique (10) selon l'une quelconque des revendications précédentes, et **en ce que** le boîtier de commande (86) comporte une interface de bus de communication (92) reliée électriquement à la section formant bus de communication (74) de la boîte de raccordement électrique (10).

## Patentansprüche

1. Elektrisches Anschlussmodul (10) für ein Fahrzeug mit mehreren Relais (16), einem Relaisträger (36) und einem Verbindungsgitter (34) mit Anschlussabschnitten (62), wobei jedes Relais (16) elektrische Anschlussstifte (22, 24, 26, 28) aufweist, die das Einstecken des Relais (16) in den Relaisträger (36) und den elektrischen Anschluss an den Verbindungsgitter (34) ermöglichen, **dadurch gekennzeichnet, dass** jedes Relais (16) eine Kommunikationsbus-Schnittstelle (32) aufweist, die mit einem Stift des Relais, dem sogenannten Steuerstift (26), verbunden ist, und dass das Verbindungsgitter (34) einen Abschnitt aufweist, der einen Kommunikationsbus (74) bildet, wobei die Steuerstifte der Relais (26) elektrisch mit dem Abschnitt verbunden, der den Kommunikationsbus (74) bildet, wenn die Relais (16) in den Träger (36) eingesteckt sind.

2. Elektrisches Anschlussmodul (10) für ein Fahrzeug nach Anspruch 1, **dadurch gekennzeichnet, dass** der Abschnitt, der den Kommunikationsbus (74) bildet, elektrisch mit einem elektrischen Masseabschnitt des Verbindungsgitters (64) gekoppelt ist, so dass er einen elektrischen Kondensator bildet.

3. Elektrisches Anschlussmodul (10) für ein Fahrzeug nach einem der vorstehenden Ansprüche, **dadurch gekennzeichnet, dass** der Abschnitt, der den Kommunikationsbus (74) bildet, eine Stärke aufweist, die geringer als diejenige der anderen Abschnitte (68, 70, 72) ist.

4. Elektrisches Anschlussmodul (10) nach einem der vorstehenden Ansprüche, **dadurch gekennzeichnet, dass** das Relais (16) einen elektromechanischen Schalter aufweist, der dafür vorgesehen ist, den elektrischen Strom, der auf die elektrischen Verbraucher des Fahrzeugs verteilt wird, durchfließen zu lassen.

5. Elektrisches Anschlussmodul (10) nach einem der Ansprüche 1 bis 3, **dadurch gekennzeichnet, dass** das Relais (16) einen Halbleiterschalter aufweist, der dafür vorgesehen ist, den elektrischen Strom, der auf die elektrischen Verbraucher des Fahrzeugs verteilt wird, durchfließen zu lassen.

6. Elektrisches Anschlussmodul (10) für ein Fahrzeug nach einem der vorstehenden Ansprüche, **dadurch gekennzeichnet, dass** der Kommunikationsbus vom Typ LIN ist.

7. Elektrisches Anschlussmodul (10) für ein Fahrzeug nach einem der Ansprüche 1 bis 5, **dadurch gekennzeichnet, dass** das Verbindungsgitter (34) einen weiteren Abschnitt (76) aufweist, der mit dem Abschnitt, der den Kommunikationsbus (74) bildet, einen Übertragungsbus als differentielles Paar (74, 76) bildet, wobei ein weiterer Steuerstift des Relais (80) elektrisch mit dem anderen Abschnitt (76) verbunden ist, der einen Übertragungsbus als differenzielles Paar (74, 76) bildet.

8. Elektrisches Anschlussmodul (10) für ein Fahrzeug nach einem der vorstehenden Ansprüche, **dadurch gekennzeichnet, dass** das elektrische Anschlussmodul (10) weiter zumindest eine Relaissteuerzunge (58) umfasst, die von dem Modul (10) nach außen gerichtet ist, wobei die Zunge (58) elektrisch mit dem Abschnitt verbunden ist, der den Kommunikationsbus (74) bildet.

9. System zur Verteilung von elektrischem Strom (84) für ein Fahrzeug, das ein Steuergerät (86) mit einem Mikrocontroller (90) umfasst, **dadurch gekennzeichnet, dass** das System (84) auch ein elektrisches Anschlussmodul (10) nach einem der vorstehenden Ansprüche umfasst und dass das Steuergerät (86) eine Kommunikationsbus-Schnittstelle (92) aufweist, die elektrisch mit dem Abschnitt verbunden ist, der den Kommunikationsbus (74) des elektrischen Anschlussmoduls (10) bildet.

## Claims

1. An electrical junction box (10) for a vehicle comprising several relays (16), a relay support (36), and a leadframe (34) including junction sections (62), each relay (16) including electrical connection pins (22, 24, 26, 28) allowing the plugging of the relay (16) in the relay support (36) and allowing electrical connection to the leadframe (34), **characterized in that** each relay (16) includes a communication bus interface (32) which is joined to a pin of the relay called control pin (26), and **in that** the leadframe (34) includes a section (74) forming a communication bus, the relay control pins (26) being electrically connected to the section (74) forming a communication bus when the relays (16) are plugged into the support (36).

2. The electrical junction box (10) for a vehicle according to claim 1 **characterized in that** the section (74) forming a communication bus is electrically coupled to an electric ground section of the leadframe (64) so as to form an electric capacitor.

3. The electrical junction box (10) for a vehicle according to any one of the preceding claims, **characterized in that** the section (74) forming a communication bus has a thickness smaller than the other sections (68, 70, 72).

4. The electrical junction box (10) according to any one of preceding claims, **characterized in that** the relay (16) includes an electromechanical switch provided to circulate the electric current distributed to the electric loads of the vehicle.

5. The electrical junction box (10) according to any one of claims 1 to 3, **characterized in that** the relay (16) includes a semi-conductor type switch provided to circulate the electric current distributed to the electrical loads of the vehicle.

6. The electrical junction box (10) for a vehicle according to any one of the preceding claims, **characterized in that** the communication bus is of the LIN type.

7. The electrical junction box (10) for a vehicle according to any one of claims 1 to 5, **characterized in that** the leadframe (34) includes another section (76) forming a differential pair transmission bus (74, 76) with the section (74) forming a communication bus, an another relay control pin (80) being electrically connected to the other section (76) forming a differential pair transmission bus (74, 76).

8. The electrical junction box (10) for a vehicle according to any one of the preceding claims, **characterized in that** the electrical junction box (10) further comprises at least one relay control tab (58) directed towards the outside of the box (10), the tab (58) being electrically connected to the section (74) forming a communication bus.

9. An electrical power distribution system (84) for a vehicle comprising a control box (86) equipped with a microcontroller (90), **characterized in that** the system (84) also comprises an electrical junction box (10) according to any one of the preceding claims, and **in that** the control box (86) includes a communication bus interface (92) electrically connected to the section (74) forming a communication bus of the electrical junction box (10).
